# EUROPÄISCHE PATENTANMELDUNG

(11) **EP 1 320 243 A1**
(43) Veröffentlichungstag der Anmeldung: **18.06.2003**
(21) Anmeldenummer: 01811236.7
(22) Anmeldetag: 17.12.2001
(51) Int. Cl.: H04M 1/02

(54) **Mobiltelefon**

(71) Anmelder: Ulrich, Franz, 8832 Wollerau (CH)
(72) Erfinder: Ulrich, Franz, 8832 Wollerau (CH)
(74) Vertreter: Luchs, Willi

(57) **Zusammenfassung**

Ein Mobiltelefon ist mit einem Gehäuse (2), einem Eingabefeld (4) und einem Anzeigefeld bzw. Display (15) versehen. Das Anzeigefeld bzw. Display (15) ist erfindungsgemäss unterhalb des Eingabefeldes (4) angeordnet. Das Eingabefeld (4; 24) vorliegend ist als ein Tastenfeld ausgebildet. Durch diese Anordnung des Anzeigefeldes unterhalb des Eingabefeldes wird in einfacher Weise erreicht, dass das Eingabefeld insbesondere auch bei kleinen Mobiltelefonen mit dem Daumen der gleichen Hand eines Benutzers bequem erreicht werden kann, mit der es gehalten wird.

## Beschreibung

Die Erfindung bezieht sich auf ein Mobiltelefon mit einem Gehäuse, einem Eingabefeld und einem Anzeigefeld bzw. Display.

Mobiltelefone mit einem Gehäuse, einem Eingabefeld und einem Anzeigefeld bzw. Display sind in den verschiedensten Ausgestaltungen bekannt und auf dem Markt erhältlich. Bei diesen bekannten Mobiltelefonen ist das Eingabe- bzw. Tastenfeld unterhalb des Anzeigefeldes angeordnet. Mit der Tendenz, die Mobiltelefone immer kleiner zu gestalten, wird es immer schwieriger und unbequemer, das Gerät in einer Hand zu halten und gleichzeitig mit der gleichen Hand durch Daumenberührung das Eingabe- bzw. Tastenfeld zu betätigen. Der Daumen muss stark zum Eingabe- bzw. Tastenfeld hin gekrümmt werden, was insbesondere bei einer längeren Betätigung, z.B. beim Verschicken von SMS-Nachrichten, ermüdend ist, so dass das Mobiltelefon entweder mit einer Hand gehalten und mit der anderen Hand, meistens mit dem Zeigefinger derselben, die Eingabe getätigt werden muss, oder zumindest eine Unterlage benötigt wird, auf welche das Mobiltelefon bei der Betätigung gelegt wird.

Der vorliegenden Erfindung liegt die Aufgabe zugrunde, ein Mobiltelefon zu schaffen, das auch bei kleiner Bauweise eine bequeme einhändige Betätigung des Eingabefeldes ermöglicht.

Diese Aufgabe wird erfindungsgemäss dadurch gelöst, dass das Anzeigefeld bzw. Display unterhalb des Eingabefeldes angeordnet ist.

Weitere bevorzugte Ausgestaltungen des erfindungsgemässen Mobiltelefons bilden den Gegenstand der abhängigen Ansprüche.

Durch die erfindungsgemässe Anordnung des Anzeigefeldes unterhalb des Eingabefeldes wird in einfacher Weise erreicht, dass das Eingabefeld insbesondere auch bei kleinen Mobiltelefonen mit dem Daumen der gleichen Hand eines Benutzers bequem erreicht werden kann, mit der es gehalten wird, ohne dass der Daumen stark gekrümmt werden muss.

Die Erfindung wird nachfolgend anhand der Zeichnung näher erläutert. Es zeigen rein schematisch:

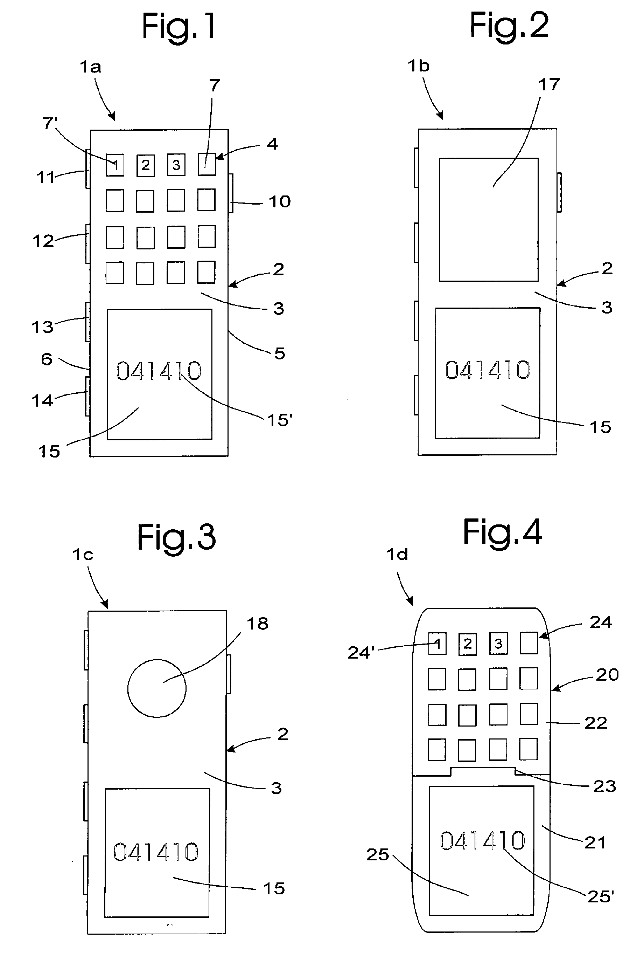

- Fig. 1 bis 4: vier verschiedene Ausführungsbeispiele des erfindungsgemässen Mobiltelefons.

Fig.1 zeigt ein Mobiltelefon 1a mit einem Gehäuse 2, auf dessen Vorderseite 3 ein als ein Tastenfeld ausgebildetes Eingabefeld 4 angeordnet ist. Das Eingabefeld 4 umfasst eine Anzahl von Tasten 7 mit , gegebenenfalls zwanzig Tasten 7, bei denen es sich um Nummerntasten zur Eingabe von Zahlen und Zeichen und um andere Funktionstasten, wie beispielsweise Auswahltasten, Blättertasten, Lautstärketasten etc. handelt. Die jeweiligen Zahlen 7', 24' bzw. nicht näher gezeigten Buchstaben der Tasten 7, 24 wie auch die Zahlen 15', 25' oder dergleichen auf dem Display 21 sind derart zueinander angeordnet, dass sie von einem Betrachter normal vom unteren Bildrand her gesehen gelesen werden können. Weitere Bedienungstasten können auch an Seitenflächen 5, 6 des Gehäuses 2 angebracht werden, wie z.B. die Ein/Aus-Taste 10 sowie weitere Tasten 11 bis 14 nach Fig. 1.

Auf der Vorderseite 3 des Gehäuses 2 ist ferner ein Anzeigefeld 15, ein Display, angeordnet. Erfindungsgemäss befindet sich dieses Anzeigefeld 15 unterhalb des Eingabefeldes 4, so dass auch bei kleinen Mobiltelefonen beim Ergreifen des Gehäuses 2 mit einer Hand das Eingabe- bzw. Tastenfeld 4 mühelos mit dem Daumen der gleichen Hand betätigt werden kann, ohne dass der Daumen stark gekrümmt werden muss.

Ein in Fig. 2 dargestelltes Mobiltelefon 1b weist wiederum das auf der Vorderseite 3 des Gehäuses 2 angeordnete Anzeigefeld bzw. Display 15 sowie ein oberhalb dieses Anzeigefeldes 15 angeordnetes Eingabefeld 17 auf. Das Eingabefeld 17 ist bei dieser Variante als ein Berührungsfeld, in der Fachsprache "Touch-Screen" genannt, ausgebildet. Die erfindungsgemässe Anordnung des Anzeigefeldes 15 unterhalb des auch bei kleinen Geräten mit dem Daumen gut erreichbaren Eingabefeldes 17 ermöglicht auch bei diesem Mobiltelefon 1b bequeme Handhabung mit einer Hand.

Eine weitere, in Fig. 3 dargestellte Variante eines Mobiltelefons 1c unterscheidet sich von denjenigen nach Fig. 1 und 2 wiederum durch die Ausbildung des Eingabefeldes, für welchen gegebenenfalls ein mittels Daumen bedienbarer Trackball 18 vorgesehen ist. Das Eingabefeld 18 ist wiederum oberhalb des Anzeigefeldes 15 angeordnet.

Fig. 4 zeigt ein Mobiltelefon 1d mit einem zwei auf- und zusammenklappbarer Teile 21, 22 aufweisenden Gehäuse 20, dessen Innenseite mit einem Eingabefeld 24 und einem Anzeigefeld bzw. Display 25 versehen ist. Dabei ist das Anzeigefeld 25 dem einen Teil 21, das als Tastenfeld ausgebildete Eingabefeld 24 dem anderen Teil 22 des Gehäuses 20 zugeordnet. In einem aufgeklappten, für die Betätigung des Mobiltelefons 1d bereitstehenden Zustand befindet sich auch bei dieser Ausführung das Eingabefeld 24 oberhalb des Anzeigefeldes 25. Ferner ist noch Scharnier 23 angedeutet, welches das Auf- und Zuklappen des einen zum anderen Teil 21, 22 ermöglicht.

Alle dargestellten Ausführungsbeispiele der Mobiltelefone ermöglichen auch bei kleinen Modellen eine bequeme einhändige Betätigung des jeweiligen Eingabefeldes.

Selbstverständlich können die in der Zeichnung nur vereinfacht dargestellten Mobiltelefone eine beliebige, der bequemen Handhabung sowie den ästhetischen Anforderungen Rechnung tragende Aussenform aufweisen.

## Patentansprüche

1. Mobiltelefon mit einem Gehäuse (2; 20), einem Eingabefeld (4; 17; 18; 24) und einem Anzeigefeld bzw. Display (15; 25), **dadurch gekennzeichnet, dass**
das Anzeigefeld bzw. Display (15; 25) unterhalb des Eingabefeldes (4; 17; 18; 24) angeordnet ist.

2. Mobiltelefon nach Anspruch 1, **dadurch gekennzeichnet, dass** das Eingabefeld (4; 24) als ein Tastenfeld ausgebildet ist.

3. Mobiltelefon nach Anspruch 1, **dadurch gekennzeichnet, dass** das Eingabefeld (17) als ein Berührungsfeld bzw. Touch-Screen ausgebildet ist.

4. Mobiltelefon nach Anspruch 1, **dadurch gekennzeichnet, dass** das Eingabefeld (18) als ein Trackball ausgebildet ist.

5. Mobiltelefon nach einem der Ansprüche 1 bis 4, **dadurch gekennzeichnet, dass** das Eingabefeld (4; 17; 18) und das Anzeigefeld bzw. Display (15; 25) auf einer Vorderseite (3) des Gehäuses (2) angeordnet sind.

6. Mobiltelefon nach einem der Ansprüche 1 bis 4, **dadurch gekennzeichnet, dass** das Gehäuse (20) zwei auf- bzw. zusammenklappbare Teile (21, 22) aufweist, wobei das Eingabefeld (24) und das Anzeigefeld bzw. Display (25) auf der Innenseite des Gehäuses (20) angeordnet und jeweils einem der Teile (21, 22) zugeordnet sind, derart, dass in einem aufgeklappten, für die Betätigung des Mobiltelefons (1d) bereitstehenden Zustand das Anzeigefeld (25) unterhalb des Eingabefeldes (24) angeordnet ist.

7. Mobiltelefon nach einem der Ansprüche 1 bis 6, **dadurch gekennzeichnet, dass** Seitenflächen (5, 6) des Gehäuses (2, 20) mit weiteren Bedienungstasten (10 bis 14) versehen sind.

8. Mobiltelefon nach Anspruch 1 oder 2, **dadurch gekennzeichnet, dass** die jeweiligen Zahlen (7', 24') bzw. nicht näher gezeigten Buchstaben der Tasten (7, 24) wie auch die Zahlen (15', 25') oder dergleichen auf dem Display (21) derart zueinander angeordnet sind, dass sie von einem Betrachter normal von der unteren Seite des Mobiltelefons her gelesen werden können.
